(19) Europäisches Patentamt
European Patent Office
Office européen des brevets

(11) **EP 4 220 539 A1**

(12) **EUROPEAN PATENT APPLICATION**

(43) Date of publication:
**02.08.2023   Bulletin 2023/31**

(21) Application number: **22153613.9**

(22) Date of filing: **27.01.2022**

(51) International Patent Classification (IPC):
***G06T 5/00*** (2006.01)        ***H04N 5/235*** (2006.01)
***H04N 19/98*** (2014.01)        ***H04N 19/40*** (2014.01)

(52) Cooperative Patent Classification (CPC):
**H04N 19/98; G06T 5/007; H04N 19/40;**
G06T 2207/20081; G06T 2207/20084;
G06T 2207/20208

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **VAREKAMP, Christiaan**
  **Eindhoven (NL)**
• **NIJLAND, Rutger**
  **Eindhoven (NL)**

(74) Representative: **Philips Intellectual Property &
Standards
High Tech Campus 52
5656 AG Eindhoven (NL)**

(54) **AUTOMATIC LUMINANCE ADJUSTMENT FOR HDR VIDEO CODING**

(57)    To obtain a practical yet versatile and accurate apparatus for luminance re-grading (300) of an input high dynamic range image (IM_HDR) of first luminance dynamic range into a second image (IM DR2) of second luminance dynamic range, the inventors propose the apparatus to comprise:
- a first neural network processing circuit (301), having as input a set of pixel luminances of the input high dynamic range image (IM_HDR), characterized in that the first neural network processing circuit has at least two sets of outputs, a first output set (S1) comprising at least one parameter (P11) which determines a re-grading function, and a second output set (S2) comprising at least one corresponding parameter (P12) which determines a re-grading function which is determined by the same parametric definition but a different parameter value;
- a second neural network processing circuit (302), which has as input at least one measurement value (La) from at least one sensor (311), and as output a set of weights corresponding in amount to at least the number of sets of the first neural network processing circuit;
- a combiner (303), arranged to add a first parameter (P11) of the first output set of the first neural network processing circuit multiplied by a corresponding first weight (wl 1) from the second neural network processing circuit to a corresponding output (P12) for the same re-grading function defining parameter of the second output set of the first neural network processing circuit multiplied by a corresponding second weight (w12) from the second neural network processing circuit, yielding a final parameter (P1_f); and
- a luma mapping circuit (320) arranged to map input lumas of the input high dynamic range image (IM_HDR) with a luma mapping function (F_L) which is defined by the final parameter (PI_f) to obtain output lumas of the second image (IM DR2).

Fig. 3

**Description**

FIELD OF THE INVENTION

The invention relates to apparatuses and methods to create secondary dynamic range images for primary (or master) dynamic range images, to be used in High Dynamic Range (HDR) video coding, in particular of the type which communicates at least two different dynamic range images to receivers (typically one as an actual pixelated image, and the other as data of a calculation method to derive it from the actually received image).

The invention also relates to apparatuses and methods to be used in devices comprising a receiver of high dynamic range images, to calculate secondary dynamic range images according to various technical desiderata.

Such apparatuses or methods may be comprised in consumer devices such as television displays, mobile phones, but also professional systems such as e.g. video communication in commercial applications in shops, etc. On the HDR video creation and communication side, it may be applied e.g. in the endpoint station of a deployer of a television communication network which communicates the HDR video images to end customers (distribution), e.g. in a satellite, or cable head end, or mobile phone communication network and the like, but it can also be used in contribution where the video is relayed from a first professional (business) e.g. making the video, to a second business e.g. distributing the video over a certain medium, area, or clientele.

The apparatuses and methods specifically make use of the advances in machine learning that can learn specific attributes of images, in this case a needed luminance re-mapping function to create -given the specifics of any image or image category- a good quality secondary dynamic range image, e.g. a useful scenario being the creation of low dynamic range images for the HDR images.

BACKGROUND OF THE INVENTION

High dynamic range video handling (coding, or display adaptation which is the re-mapping of an image of first dynamic range to the specific displayable dynamic range capability of any display, and the like) is a quite recent technical field (in the television world its initial versions stem from after 2010), which still comes with several unsettled questions and problems. Although HDR televisions are being sold for a few years now (typically with a maximum displayable luminance a.k.a. peak brightness around 1000 nit or Cd/m^2, i.e. somewhat less like 600 nit, or somewhat higher like 2000 nit, and in the future possibly going to 5000 nit or beyond), the technology that comes before the displaying on an improved display (which is a matter of physics and electronic driving), i.e. content making, coding, or color processing, still has a number of solutions to invent/improve and deploy. There have been a number of movies which have been created and communicated, and also a few early-days broadcasts, and though in general the result is great, there are also still possibilities to further improve on certain aspect, ergo, the technology is not in a phase of being largely settled currently.

High dynamic range images are defined as images that compared to the status quo of legacy **low dynamic range (LDR) images** a.k.a. **standard dynamic range (SDR) images,** which were generated and displayed in the second half of the 20th century, and are still the mainstream of most video technologies, e.g. television or movie distribution over whichever technology, from terrestrial broadcasting to youtube video supply via the internet and the like. The properties of SDR images, and how to deal with them (e.g. make nice looking movie images) are well understood. Its luma codes - typically 8 bit codes ranging from 0 to 255- are well-suited to define various grey levels of objects in relatively uniformly lit environments. With a relative maximum of 255 representing "white" (which in LDR had no actual luminance associated, as it would be rendered differently depending on the peak brightness of any purchased display, but in the HDR era is associated with a maximum luminance ML_LDR = 100 nit), the lower levels become progressively darker, i.e. a percentage of white e.g. 5% looking black, in a quadratic manner.

A HDR image is an image which can represent (code) a number of extra luminances (in general extra colors if one also involves wider-spanned color primaries), in particular a number of extra grey steps above (100 nit) white. There is no absolute requirement that these extra steps come with larger luma numbers represented by extra bits (although typically one would like to use 10 bit for HDR color components), since that is ultimately determined by which Electro-optical Transfer Function (EOTF) defines which pixel luminances as an amount of available luma codes, and some 8 bit HDR decoders have been demonstrated.

Formally, one can define the luminance dynamic range as the span of all luminances from a minimum black (MB) to a peak white or peak brightness (PB) a.k.a. maximum luminance (ML), ergo, in one might have HDR movies with very deep blacks, or with just normal (LDR) blacks, but brighter pixels (often called highlights). So pragmatically one may define, and handle, e.g. color process, the HDR images mainly on the basis of a sole value, namely being a higher peak brightness (usually this is what users are most interested in, whether it be bright explosions or merely the more realistic specular reflection spots on metals and jewels and the like, and one may pragmatically state the minimum black to be the same for the SDR image and an HDR image).

In practice from legacy times one can state that the SDR image's 1000:1 luminance dynamic range would fall below 100 nit (and above 0.1 nit), and a HDR image would typically have at least 5x brighter PB, ergo, 500 nit or higher (this is where the differences start to become impressive, making the user see really beautiful e.g. glowing parts in the images; obviously a use of a higher maximum may be better and more desirable, so one can start defining really good HDR when it has a ML of 1000 nit or higher, i.e. typically in a video at least some of the pixels will be given that luminance to make them look the most impressive compared to the rest of the scenes).

Note that, without diving into many details which may be unnecessary here, one may indicate which kind of HDR one has by associating a peak brightness number as metadata to the HDR image. This may be seen as the luminance of the brightest pixel existing in the image, and is often formally defined by associating a reference display with the image (i.e. one associates a virtual display with the image, with its peak bright corresponding to the brightest pixel which exists in the image or video, i.e. the brightest pixel which needs displaying, and then one codes this PB_C - C stands for "Coding"- of that virtual display as metadata additional to the image pixel colors matrix).

In this manner one need not "unelegantly" code HDR images with an excessive amount of bits, and can simply re-use existing technology with a 10 bit word length for the color components (12 or more bits already seen as rather heavy by several tech suppliers in the total video handling chain, for various reasons, at least for the near future; and the PB_C metadata allows to easily upgrade the HDR framework for future scenarios).

One aspect re-used from classic video engineering as that pixel colors are typically always communicated as **YCbCr** colors, with Y the so-called **luma component** (which is the technical coding for the luminance) and Cb and Cr a blue and red chroma component completing the trichromatic additive color definition.

The luma is defined from the non-linear R'G'B' color components (the prime ' indicating the non-linear nature i.e. the difference from **linear** RGB components of the colors, amounts of red, green and blue photons coming out of a displayed pixel of any particular color so to speak), and via an equation which reads:

$$Y = a1*R' + a2*G' + a3*B'. \qquad \text{[Eq. 1]}$$

A question is how the non-linear R'G'B' are related to (in fact defined for) the linear RGB components.

The definition of the coding system, by specifying the so-called electro-optical transfer Function (EOTF), or its inverse the opto-electrical transfer function which calculates the non-linear components from the corresponding linear ones, e.g.:

$$R' = OETF\_PQ(R) \qquad \text{[Eq. 2]}$$

E.g., whilst in the LDR era there was only the standard Rec. 709 OETF, which OETF is (shortcutting some irrelevant details for this patent application) the inverse of the EOTF, and this was to a fairly good approximation a simple square root.

Then when the technical problem to code a large range of HDR luminances (e.g. 1/10,000th nit - 10,000 nit) in only 10 bit emerged, which is not possible with the square root function, a new EOTF was invented, the so-called **Perceptual Quantizer** EOTF (US9077994). This suffices to "specify" any needed HDR pixel color (or its luminance), but is not necessarily sufficient for a practical video communication system, as one typically wants more information about the HDR scene(s) or images (which e.g. the video creator may define).

So this different EOTF definition, and any input YCbCr color defined by it, will clearly have different numerical normalized components depending on whether it is an YCbCr_Rec709, or an YCbCr PQ (in fact, one can see this by turning the R'G'B' cube on its black tip, with the Y-axis of achromatic grey colors of different luma now forming the vertical: the various image pixel colors will then have different spreads along that vertical). One may assume -in technically elegantly simple formulations- the various components to be normalized between zero and one (one meaning the peak brightness, i.e. a different luminance for various coding scenarios), and then calculating a secondary image can be seen as offsetting the pixels luminances or lumas along its normalized axis.

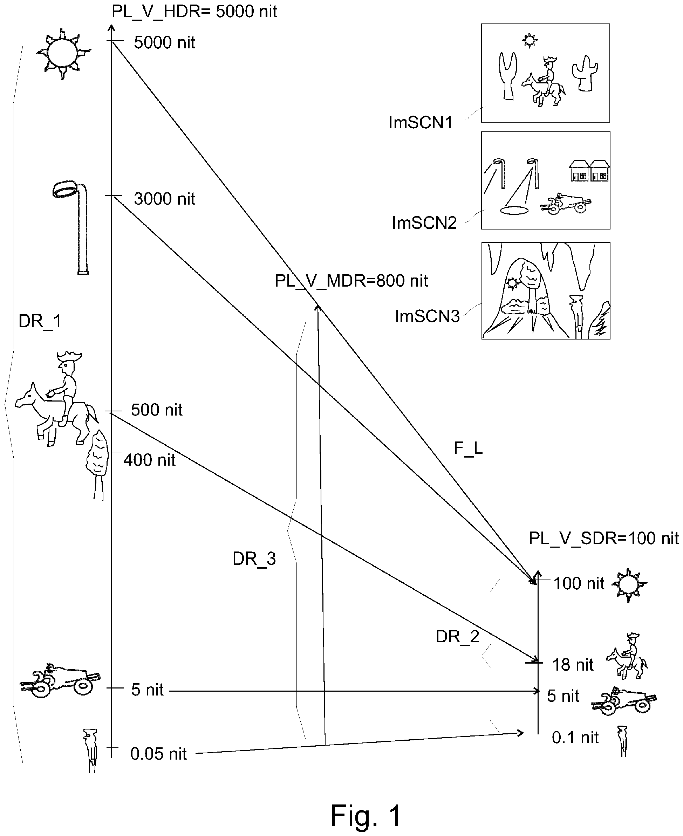

**Fig.1** shows, in absolute luminance representation for enhanced clarity, some of the issues involved in HDR image use.

In contrast to LDR imaging, where all scenes looked more or less the same (one couldn't e.g. make night scenes really dark, as one needed again the full spread between luma 0 and almost 255 to make all image object sufficiently visible, ergo one needed to simulate night scenes by coloring them blue; and also there was just one kind of white, and not e.g. super-whites), an all-encompassing HDR video system would allow making, and ultimately displaying, many kinds of HDR image, giving many kinds of different visual impression (a.k.a. look). E.g., in addition to a "normally lit" image, e.g. of a dull day, or uniformly lit room, one could make a desert image (ImSCN1), in which the strongly sunlit objects are somewhat brighter (e.g. 500 nit on average instead of 100 nit or less), but also which contain ultra-bright pixels like the 5000 nit quite bright sun). But one could also define nighttime images (which may still contain a few quite bright pixels like the street light) like the city night scene ImSCN2, or the cave ImSCN3. Ergo, pixels can fall all over a luminance axis spanning e.g. between 1/5000 nit and 5000 nit.

At least some video content makers may hence want to define their original (a.k.a. master) images as beautiful as possible, i.e. on a e.g. PB_C = 5000 nit luminance range of a 5000 nit quality master HDR image. This is to make "universal" HDR images. So a future display which can display e.g. up to 10,000 nit pixel luminance, will indeed show a bright 5000 nit sun (as intended by the creator of the movie).

A problem is of course that, even in the far future, at least some viewers may have a display which does not display all the way up to 5000 nit, but e.g. only up to 800 nit.

The question is then what to do with the master 5000 nit HDR image pixel luminances, i.e. how to display them (which would involve a conversion to a 800 nit maximum even if one didn't apply any luminance mapping algorithm. E.g. if the tv merely displayed with exact luminance as prescribed in the received image the pixel luminances, it would clip, and so merge the shape of the sun disk with clouds around it which have pixel luminances in the master 5000 nit HDR image of e.g. 900 or 1200 nit. This may be reasonable in some scenarios, but less so in others. The tv could try to use as internal automatic luminance mapping a smarter algorithm, but there is still no saying to which final luminances any luminances as accurately artistically made by the creator would map, and on which images on which displays this would look reasonable, or less reasonable.

Therefore more advanced HDR video codecs don't just allow the creator to make and communicate the master HDR image itself (i.e. as a matrix of e.g. SMPTE 2084 EOTF-defined YCbCr pixel colors), but to also specify at least one secondary reference grading. I.e., the video creator can define exactly how he thinks the luminances of any image should be mapped to e.g. a 100 nit PB_C_LDR secondary reference luminance range. He may typically do this by defining, e.g. one for each time successive video image, a function F_L for mapping any possible input HDR luma (Y_HDR_in ranging over 0-1023) into a correspond LDR luma (Y_LDR_out ranging over the same span of values 0-1023, but having a different value, or position along the luma axis).

Once having communicated two reference images (a.k.a. **gradings),** or the corresponding data being one of the two images and the function F_L, there are algorithms to determine any intermediate grading, like the 800 nit grading.

The scenario up to now assumes that there is one secondary e.g. LDR reference grading (one basic truth) corresponding to a master HDR image as input image. This should not be confused with a different technical scenario of having different possible **flavors** of related secondary images, which will be discussed with our embodiments below!

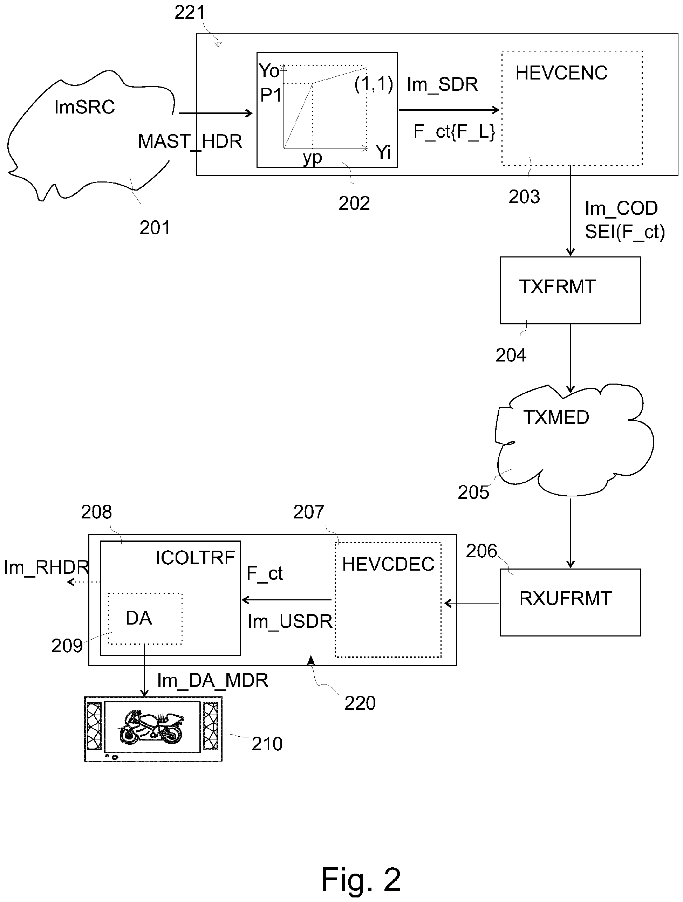

**Fig. 2** illustrates an exemplary HDR video coding and communication chain, which is one embodiment in which the present new techniques discussed below can be used.

Details of a possible coding can be found in ETSI standard TS 103 433-2 V1.1.1 "High performace Single Layer High Dynamic Range **[SLHDR]**, Part 1 & 2", herein incorporated by reference.

At the video encoding side, a master HDR image (MAST_HDR) is obtained, e.g. a high quality 5000 nit image. Without limitation, we describe two useful variants. In a first variant, a human color grader starts from an initial image (e.g. captured straight from camera), and performs a precise grading (i.e. determination) of the luminances of various objects in the image, so that the image obtains a certain look. As a second example an automaton determines the master HDR image from the initial camera-captured image, e.g. some rough grading may be used on the relative luminances image from camera to make a sufficiently good quality 5000 nit master HDR image, or, an existing LDR image may be converted into a pseudo-HDR image, by inverse tone mapping.

Without limitation, the elucidation embodiment of Fig. 2 assumes that the master HDR image is actually communicated as a corresponding LDR image (Im_SDR). Ergo, a suitable luminance or luma mapping function (F_L) must be determined, to calculate the LDR image from the master HDR image. If one processes normalized input lumas Yi (i.e. luma code divided by power(2; number of bits)) into normalized output lumas with e.g. a luma mapping function which consists of two linear segments, and if one fixes the input coordinate of the connection point (yp) to e.g. halfway, this function can be specified by one parameter P1, which determines the slope of the first linear segment.

A color transformer 202 in video encoder 221 applies the F_L luminance mapping of the luminances of the master HDR image (MAST HDR) pixels (actually it typically applies a 3D color transformation F_ct.

The LDR image is then typically compressed in compressor 203, using any of the known video compression techniques, e.g. VVC, yielding a coded version of the LDR video image, Im_COD. The luma mapping function F_L (or actually the data of the color mapping F_ct, which typically in addition contains a function for changing the pixel saturation, as the hue is typically maintained constant between input and output functions), is treated as metadata by the compressor, and Supplemental Enhancement Information (SEI) is a good method to convey any data regarding processing functions desired.

After the action of the content video encoder 221, from the image communication technology perspective, the rest of the communication chain pretends it gets a "normal SDR" image as input. So e.g. a transmission formatter 204 may apply all the necessary transformations to format the data to go over some transmission medium 205 (e.g. channel coding to store on a BD disk, or frequency coding for cable transmission, cut the video into suitable data packets, etc.).

Subsequently the image data travel over some transmission medium 205, e.g. a satellite or cable or internet transmission, e.g. according to ATSC 3.0, or DVB, or whatever video signal communication principle, to one or more receiving side(s), which may be a consumer video device like a television set, or a settopbox, or a professional system like a movie theatre reception unit, etc.

At any consumer or professional reception side, a receiver unformatter 206, which may be incorporated in various physical apparatuses like e.g. a settopbox, television or computer, undoes the channel encoding (if any) by applying unformatting and channel decoding. Then a video decompressor 207 inside video redetermination apparatus 220 (e.g. a video decoder) applies e.g. HEVC decoding, to yield a decoded SDR image Im_RLDR, and unpacks the color transformation function metadata F_ct. Then a color transformer 208 is arranged to transform the SDR image luminances to obtain output image luminances of some output image.

Depending on the type of video redetermination apparatus 220, two scenarios are of interest. If the apparatus is a pure decoder, it may apply the inverse of the (luminance or) luma mapping function F_L, to obtain as reconstructed HDR image Im_RHDR a close reconstruction of the master HDR image (i.e. the same peak brightness dynamic range grading, and approximately the same pixel luminances except for some video compression errors of the communicated LDR image). The apparatus can also determine an image of a different peak brightness (i.e. different from the peak brightness master HDR image, and the peak brightness of the second reference grading which in this embodiments duplicates as a communication image, i.e. e.g. 100 nit). E.g. a display adaptation algorithm of a display adaptation unit (e.g. electronic circuit) 209 may determine a function for calculating a 900 nit display adapted image Im_DA_MDR, which is optimized for a connected 900 nit capability display. Such an algorithm, of which we describe several variants in WO2017108906, typically applies a weaker version of the inverse of the function F_L.

The present technical components (the innovative ones according to the current teaching and/or prior art components with which they may be connected, cooperating, integrated, etc.) may be embodied or realized as various technical systems which are typical in image or video technology, i.e. e.g. in various hardware appliances. E.g. video redetermination apparatus 220 may have any technical video supply output, e.g. an HDMI cable that can be connected to a television display and the like (also e.g. a storage appliance, etc.; or even a network cable or wireless output to communicate the output image, Im_RHDR respectively Im_DA_MDR, to another potentially remote device, or system, etc.). Depending on the elected physical variant, there may be an image or video output signal formatter which converts the image as appropriate for any technical situation (e.g. the pixel colors may have an R,G,B representation defined by a second OETF, e.g. HLG-formatted, and uncompressed, etc.

Two embodiments exist for the determination of the luma mapping function F_L. It may on the one hand be defined by a human color specialist optimizing the created video, i.e. a color grader. On the other hand in several scenarios however, one will rely on (potentially partially preconfigured by a human to make them lean towards a certain colorimetric behavior) an automaton to determine a suitable curve shape of the luma mapping function F_L for each different type of HDR scene (e.g. potentially a different function per video time instant image).

The needed curve shape will depend on various factors. Ideally, the optimal curve depends on semantic information that humans attach to the various image objects. The may desire to make the flames of a hearth, or the light of a bulb, shine brightly compared to the rest of the image, and therefore define a curve shape so that the function increases the luminance of pixels falling within the range of luminances the various pixels in e.g. the flame have.

In practice one can already define sufficient functions depending on such factors such as the total dynamic range (i.e. the peak brightness PB_C of the image, e.g. 5000 nit), but also what areas of various luminance value exist in the image (and in more advanced methods not only how many e.g. 95% percentile brightest pixels, but also whether they are e.g. central or peripheral in the image, or other geometric aspects).

The present applicant has deployed a few versions of automaton, which currently serve various video communication systems.

E.g., an automaton was designed to determine an optimal shape, e.g. an optimal slope for luminance boosting the darkest lumas with a first linear system, for the three-part curve of the above mentioned SLHDR ETSI standard (see also WO 2016119979). This curve (called **Para** [see inset in Fig. 3 of this application]) is defined by three parameters: a first slope for a linear segment starting from the darkest black (zero luma) and a second slope for a second linear segment going downwards from the brightest white (i.e. normalized luma = 1), define an intersection point, and a third parameter defines a width of a parabolic region around this intersection, which connects with shortened versions of the two linear segments. The automata use a lot of math to analyze the statistics of an input image, and come to 3 optimal parameter values for the best re-grading i.e. luma remapping curve for that image. Versions with 5 parameters, which also include a clipping zone for the darkest blacks and brightest whites exist also, etc., and one can make similar automata for further differently parametrized curves, such as e.g. a customizable multi-linear-segment curve.

Automatons will also prove of interest if in the future non-professionals, i.e. consumers, will start making their own HDR content. It is expected that contrary to a professional grader, who could spend perhaps even half a day on grading a specific scene (depending on which budget the movie maker has reserved or still available for grading), but at least some fraction of consumers will want to do as little tweaking as necessary.

One might desire better curves, which try to cover other image aspects.

But what would make the automaton technology even more cumbersome, is if for any reason one would desire to have various flavors. Applicant has recently been looking into shifting the paradigm, to not demand that there is one unique "best" grading curve, but one might make e.g. two reasonable re-grading functions for defining two flavors of LDR image which work well with the input master HDR image. E.g., a first luma mapping curve F_L1 which has somewhat more luminance boost in the darkest linear segment, making the darkest pixels somewhat brighter in the output LDR image, and a second flavor of luma mapping curve F_L2 which keeps the darkest pixels in the scene somewhat darker. The video creating artist may have his mind set on one sole best function, e.g. he wants to keep the darkest pixels nicely dark, so they retain an air of mystery. But maybe some user may desire a somewhat lighter, or even more revealing version of the dark regions in some image.

SUMMARY OF THE INVENTION

The difficulties of getting appropriate re-gradings of any video is handled by apparatus for luminance re-grading (300) of an input high dynamic range image (IM_HDR) of first luminance dynamic range into a second image (IM_DR2) of second luminance dynamic range, the apparatus comprising:

- a first neural network processing circuit (301), having as input a set of pixel luminances of the input high dynamic range image (IM_HDR), characterized in that the first neural network processing circuit has at least two sets of outputs, a first output set (S1) comprising at least one parameter (P11) which determines a re-grading function, and a second output set (S2) comprising at least one corresponding parameter (P12) which determines a re-grading function which is determined by the same parametric definition but a different parameter value;
- a second neural network processing circuit (302), which has as input at least one measurement value (La) from at least one sensor (311), and as output a set of weights corresponding in amount to at least the number of sets of the first neural network processing circuit;
- a combiner (303), arranged to add a first parameter (P11) of the first output set of the first neural network processing circuit multiplied by a corresponding first weight (w11) from the second neural network processing circuit to a corresponding output (P12) for the same re-grading function defining parameter of the second output set of the first neural network processing circuit multiplied by a corresponding second weight (w12) from the second neural network processing circuit, yielding a final parameter (P1_f); and
- a luma mapping circuit (320) arranged to map input lumas of the input high dynamic range image (IM_HDR) with a luma mapping function (F_L) which is defined by the final parameter (P1_f) to obtain output lumas of the second image (IM_DR2).

An example of a single parameter controllable re-grading function is a two linear segments function defined on normalized-to-one luma axes, wherein the parameter controls the height of the first segment at input 0.5, i.e. P1=h, and Y_out(0.5)= h*0.5. We have found our three-parameter (black slope, white slope, midtone width) Para function to be quite suitable for re-grading images in certain applications (e.g. broadcasting), though more advanced re-grading functions have been developed and proposed (see e.g. the SLHDR ETSI standard), and can also be calculated by the below first neural network embodiments. In case the number of weights is equal to the number of sets, the function flavors are just weighted per se, i.e. all parameters get weighted by the same value. In case the number of output weights of the second neural network is equal to the number of sets multiplied by the number of parameters per set, i.e. the total number of output nodes of the first neural network, then one can weigh each parameter differently (as said, each triplet of parameters defines some final Para function curve shape).

The first neural network processing circuit (301) can get trained to obtain a useful set of re-grading functions (flavors), for any kind of HDR scene image. Since a few parameters characterizing the curve shape of one or more mathematically defined curves need to be learned (we elucidate with a one-parameter and three-parameter curve (Para), but the system can be extended to cover parallel re-grading curves, such as choose between a Para or a multi-linear segment curve, or learn to be consecutively applied functions, such as a fine-tuning multi-linear segment curve applied to the HDR lumas after an initial Para re-grading, etc.), any neural network topology can be used, by training it with some cost minimization function to yield output parameters close to what human graders would select for various input images. The input images may have a fixed (e.g. all 1000 nit, if the apparatus is to function e.g. in a fixed broadcast system) or variable coding peak brightness, and one will include a sizeable set of HDR images of various characteristics (all bright like the cowboy in desert example, half dark with a few bright regions like sunrays piercing through the ceiling a souk, larger and smaller dark and bright regions, flashing high brightness regions like explosions or fireworks, with human actor's face appearing in the various differently lit areas of the images like indoors and outside the window, etc.

The second neural network (**NN**) processing circuit (302) can now learn how these functions should be combined, e.g., if the light meter 311 measures a particular surround illumination level (e.g. evening television watching with dimmed light, or watching in a train during daytime, etc.), it may learn that a certain amount of function 1 (e.g. a Para with brighter linear slope for the darkest colors in the scene) needs to be mixed in with function 2 (Para with lesser slope being the average situation. And the second NN can learn different settings for different peak brightness or especially minimum coded luminance (MB_C), expecting that on average more correction will be needed for better visibility.

This allows for very low user interaction, the system will then quickly switch to an appropriate re-graded output image for any of several end viewing situations.

It is useful when the apparatus for luminance re-grading is coupled to a sensor which is coupled to a display. In this manner one can measure specifics of what is happening with the display. E.g. user may be watching differently with a landscape-oriented mobile display (this may be further combined with e.g. type of content data, e.g. extracted from descriptive metadata, whether the user is watching e.g. a downloaded movie versus a linear broadcast program), and an orientation sensor can provide input for the second NN to move to a different set of output weights for that situation. Another example is a compass and/or 3D orientation sensor, so that one can e.g. measure combined with time of day in which direction the user is viewing an image, and average influence of the sun. Another example is using a camera adjacent to the display.

It is useful when the apparatus for luminance re-grading is coupled to a light meter (311) arranged to provide a measure of an amount of light in an environment. This can enable different weightings of curves from the first NN, which still are optimized to come out specifically for different kinds of HDR scene input images, and some of them having curve shape which are better tuned for e.g. darker content in brighter viewing environments, etc.

It is useful when the apparatus for luminance re-grading is coupled to an image summarization unit (310), which is arranged to measure luminance aspects of the input high dynamic range image (IM_HDR). There are various algorithms for summarizing an image, ranging from the simple (e.g. a sub-sampled averaged regional luma image), to the complex, such as measures of intra- and inter-object contrast (like various derivatives), and texture measures, etc. All of those can simply form input for the second NN to train its internal understanding on. The neural network can then learn (based on pre-processed knowledge as input or natively based on image lumas) e.g. whether the luminances typically correspond to an indoors scene, or an indoors + outdoors scene (e.g. a view through a window), etc. In principle, although many embodiments will work with high level global parameters, also the second NN may at least partially work on the basis of geometrically localized aspects of the image, e.g. a centralized middle gray area being a correlate for a human face, etc. If further luma-derived parameters like e.g. estimated motion are also used, the apparatus can take e.g. sports settings into account (e.g. central zero motion because camera tracks motorcycle or the like, and fast outer regions).

It is useful when the apparatus for luminance re-grading comprises a user interface unit (330) arranged to determine a set of user-specified weights, and a selector (331) to select at least one user-specified weight in place of a corresponding weight from the second neural network processing circuit (302) to enter the combiner (303). It is useful to have in addition to the automatic mode of re-grading, a manner in which the user can benefit from all the learned re-grading needs insights inside the first NN, and that he himself can set some weights for at least some of the parameters. E.g. the user can set the slope for the linear segment of the darkest pixels of a Para re-grading curve, and the automaton can take care of the other two. E.g. some embodiments may contain a feedback input into the second neural network of user-selected first parameter, so the network can determine the other two correspondingly. In simpler embodiments instead of a selector 331 there can be a weight re-calculator circuit or algorithm which uses a pre-designed method to determine the two other weights of the Para given an elected slope for the darks (e.g. fixed midtone width of the parabolic middle region, and a slope for the brights which depends on the user-selected slope for the blacks and the PB_C; or in more advanced version an amount of different pixel lumas in the brightest region, etc.). In the simplest variant the users sets the three final weights himself, e.g. by using one or three sliders to move between the weights of two flavors.

It is useful when the apparatus for luminance re-grading is comprised physically in an apparatus which contains a display panel. It can be a useful apparatus for optimizing e.g. a television display in a home viewing setting, or a mobile phone, etc. This allows, in a system which decouples image making from image optimizing for display, various receiving side apparatuses to fine-tune the images with their own flavor.

It is useful when the apparatus for luminance re-grading is comprised in a video coding and communication apparatus for communicating video to one or more receivers. In contrast to receiving side embodiments, it can in some situations also be useful if a creator uses the present apparatus or method. E.g., consumer-made video can benefit from the present techniques, since at least some consumers may not have to sophisticated colorimetry insights as professional graders.

In such a configuration, the re-grading apparatus is typically not used to merely calculate a secondary graded image which is good for (final) display, but a secondary grading which is good for communication (e.g. a good LDR image corresponding to the input HDR image for SLHDR coding).

The techniques can also be performed by a method of for luminance re-grading (300) of an input high dynamic range image (IM_HDR) of first luminance dynamic range into a second image (IM DR2) of second luminance dynamic range:

- using a pre-trained first neural network processing circuit (301), having as input a set of pixel luminances of the input high dynamic range image (IM HDR), characterized in that the first neural network processing circuit has at least two sets of outputs, a first output set (S1) comprising at least one parameter (P11) which determines a re-grading function, and a second output set (S2) comprising at least one corresponding parameter (P12) which determines a re-grading function which is determined by the same parametric definition but a different parameter value, to output the at least two parameters (P11, P12) for the input high dynamic range image (IM_HDR);
- using a second neural network processing circuit (302), which has as input at least one measurement value (La) from at least one sensor (311), and as output a set of weights corresponding in amount to the total of the amount of outputs of the sets of the first neural network processing circuit, to output the set of weights;
- adding a first one of the at least two parameters (P11) of the first output set of the first neural network processing circuit after multiplication by a corresponding first weight (w11) from the second neural network processing circuit, to a corresponding second one of the at least two parameters (P12) which is a corresponding parameter of the same re-grading function from the second output set of the first neural network processing circuit and is prior to the addition multiplied by a corresponding second weight (w12) from the second neural network processing circuit, yielding a final parameter (P1_f); and
- applying a luma mapping function which has a curve shape defined by the final parameter (P1_f) to map input lumas of the input high dynamic range image (IM_HDR) to obtain output lumas of the second image (IM_DR2); or any computer program product comprising code which when run implements the method.

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes or dots may be used to indicate that a component is optional, non-dashed components not necessarily being essential. Dashes or dots can also be used for indicating that elements, which are explained to be essential, but hidden in the interior of an object, or for intangible things such as e.g. selections of objects/regions (and how they may be shown on a display).

In the drawings:

Fig. 1 schematically shows aspects involved in more advanced HDR video coding systems, i.e. systems which do not only code pixel colors of a master HDR image only, rather what is shown is how one can define a function -represented by the mapping arrows between input and output luminances- which defines at least one secondary re-graded image of different coding peak brightness (e.g. SDR) from the master HDR image;

Fig. 2 schematically illustrates an encoder and decoder in a video communication system which communicates a master image (MAST HDR) of first dynamic range (DR_1) as a representative image of different second dynamic range (DR_2);

Fig. 3 schematically shows the basic elements of the present invented apparatus for luminance re-grading (300) and some optional embodiment elements (dotted);

Fig. 4 schematically explains a convolutional neural network, which is a good neural network topology for the first neural network processing circuit (301) of Fig. 3;

Fig. 5 schematically illustrates how one can form an exemplary video describing data value, which can be input in the second neural network processing circuit (302) of Fig. 3, and

Fig. 6 schematically illustrates an embodiment in which user weights are supplemented by or replaced by weights from an external database.

DETAILED DESCRIPTION OF THE DRAWINGS

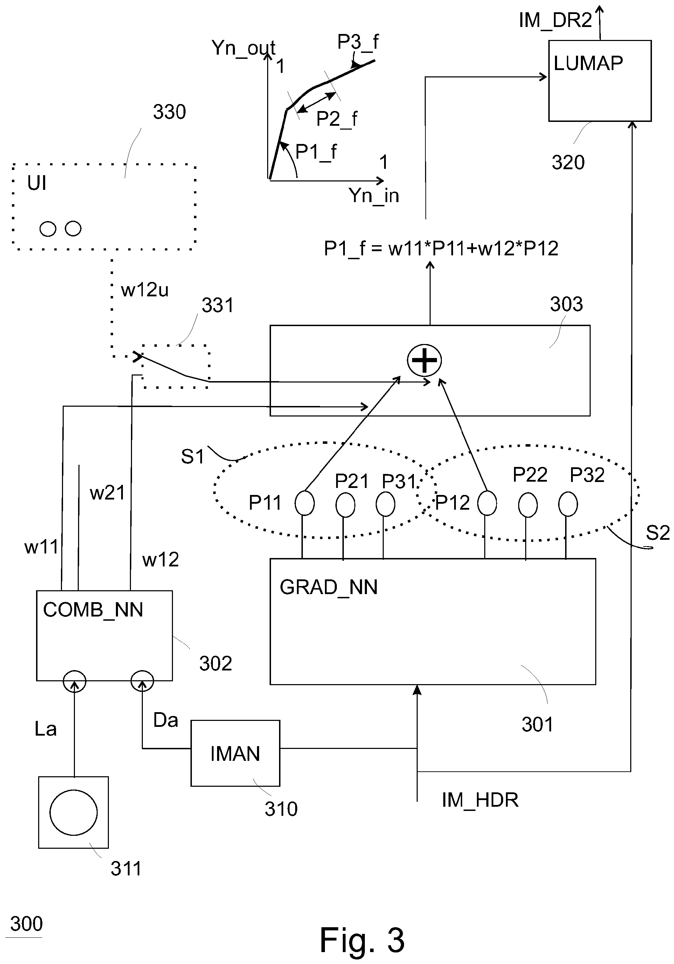

**Fig. 3** shows elements of the apparatus for luminance re-grading (300). It gets a (e.g. 4K, but it may also be sub-sampled, as often the re-grading needs don't depend strongly on resolution) input HDR image IM_HDR. This may be e.g. the master grading in a video encoding situation, or a straight from camera image in a consumer mobile phone video capturing situation, etc. So in fact, there may be as many input neurons (a.k.a. nodes) in the first neural network processing circuit (301) as the number of pixels (horizontal*vertical) $\times$ 3 (because there are three color components) when the apparatus is in action receiving input images to be luminance re-graded. Whichever the various possible internal structures (number of hidden layers etc.), which may yield slightly better results, but at the cost of more calculations, so to be selected by the apparatus manufacturer depending on e.g. the apparatus has a dedicated neural processor or can advantageously use the GPU, or any circuit to do massive parallel calculation. As output layer there are sets of parameter values, e.g. two flavors of parameters for a Para (e.g. P21 and P22 giving the same midrange width, but P11 yielding a larger slope value for the dark linear segment of the Para than P12, and P31 is a smaller slope than P32 e.g.). These would both be reasonable re-gradings for the present image typically, but not necessarily an ultimately best function to be used in the luma mapping circuit 320. A better curve is determined based on further consideration, being other parameters which characterize the situation (of which some parameters may correspond to the input of the first NN, namely parameters from or related to the input image IM_HDR).

A second neural network processing circuit (302) gets one or more situation-related variables. In practice it may be that all the elected measured values are inputted together, to let the second NN sort it all out, but other embodiments are conceivable, e.g. with a concatenation of partial networks for various types of situation-related variable, which can then e.g. be switched into the total second NN configuration depending on whether measurements are available, or desired, etc.

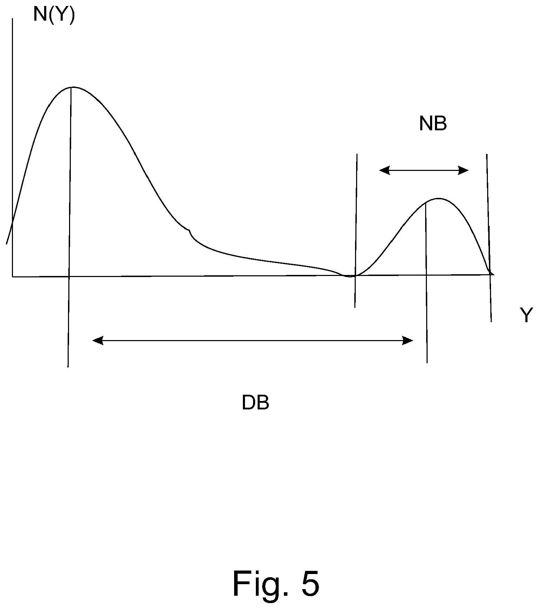

A light meter (311) arranged to provide a measure of an amount of light in an environment is a useful sensor to yield a measured situation-related input into the second NN. Other examples are parameters characterizing the input image, which may be supplied by an image summarization unit 310 (Fig. 5 teaches on possible example).

The input about the HDR image in the second NN need not necessarily be as detailed as in the first, so embodiments may use sub-sampled summarization, or image characteristics that prove useful in the flavor selection. E.g. a texture measure may be useful, as one input about the HDR image, typically to be used together with further values characterizing the spread of object lumas like contrast measures; one may use on summed total micro-texture measure for the entire image, but one could also calculate it per regional block of the input image, yielding a sub-sampled matrix of such local texture measures; furthermore, one could use the texture measure to mix only based on the shape of the typical midtones of the image where e.g. actor faces are to be expected, or e.g. the midtone width of the Para example, but one could input in the second NN various texture characterizing values for different luma sub-ranges, dark to bright.

A combiner 303 receives as input the weights (first weight w11, second weight w21, etc.) from the output layer of the second NN for the present situation (i.e. the input image, and surround, and display-related aspects, like its orientation, etc.). The combiner will make an appropriate combination from the related (corresponding) parameters of at least two of the various sets of equivalent parameters being output from the first NN.

It may calculate in the example of getting two weights from the second NN (e.g. w11=0.6 and w21=0.4):

$$P1\_f = w11*P11 + w21*P12;$$
$$P2\_f = w11*P21 + w21*P22;$$
$$P3\_f = w11*P31 + w21*P32; \hspace{3cm} \textbf{[Eqs. 3]}$$

In a scenario where the second NN outputs six weights, the combiner may calculate:

$$P1\_f = w11*P11 + w12*P12;$$
$$P2\_f = w21*P21 + w22*P22;$$
$$P3\_f = w31*P31 + w32*P32; \hspace{3cm} \textbf{[Eqs. 4]}$$

These final parameters (P1_f, P2_f, P3_f) characterize uniquely the final to be used re-grading function, use by luma mapping circuit 320, which maps all input lumas of the input HDR image (IM_HDR) to obtain the output lumas of the corresponding re-graded output image of second dynamic range.

In a basic configuration embodiment, which works fully automatically, there will not be any selector 331 or further configuration circuitry. It may be useful however if a user of the apparatus can also have his own say about the combination of the useful re-grading functions which are output from the first NN

Thereto a user interface unit 330 may be incorporate in a user apparatus, connected to the rest of the apparatus for re-grading. It can have various forms, e.g. sliders to yield two or more weights (e.g. putting the slider in the 60/40 position as explained with Eqs. 3).

The first NN needs to output only a few parameters of one or more functions, in at least two versions (/sets), ergo, there are several neural network topologies which can be trained to yield those parameters (which are equivalent calculation engines for the problem).

However, it is useful that the neural network can extract spatial aspects of the images.

So a useful, preferred, embodiments for the first NN is a convolutional neural network (CNN).

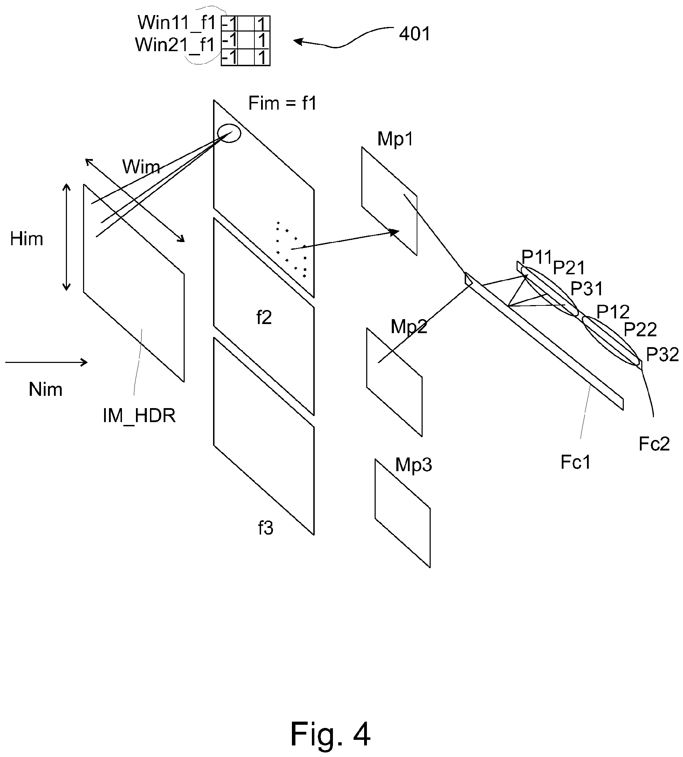

We will further elucidate with that CNN example, which is shortly explained with **Fig. 4**.

Whereas a "classical" neural network typically consists of multiple layers of networks, with each cell of a first layer connecting with all cells of a successive second layer, via learnable weights (i.e. it calculates the sum of weight_N * previous_value_N, and typically passes this sum as input to an activation function), a CNN tries to regularize by having a different kind of preprocessing stage (schematically explained in Fig. 4).

The processing of the NN starts by the first layer of nodes getting the input HDR image. If it were a 4K luma only image (i.e. horizontal pixel resolution Wim equals 4000 pixels and vertical resolution Him 2000, approximately; with Nim indicating the number of images in the training set), one would get for each training image approximately 8 million inputs, but for a color image there are also 3 color components per pixels (typically YCbCr). The first stages will do the convolutions, to detect interesting spatially localized features. In general one doesn't need to learn something so complex that it mixes the upperleft pixel of the image with the lowerright one (this often leads to problems like overmodeling, or neurons getting stuck in their state, not to mention the needlessly excessive amount of calculations usually not bringing better learning and output result accuracy).

So the convolution produces a number (Fim) of feature maps, first feature map f1 up to e.g. third feature map f3.

The values of the pixels of the feature maps (e.g. also 4K images) are obtained by convolution with learned Kernels. What happens is illustrated with exemplary Kernel 401. Lets assume that the convolution values of this 3x3 Kernel have been learned by the first feature map. Such a configuration with negative unity values to the left and positive unity values to the right is known from theoretical image processing as an edge detector for vertical edges. So the convolution with this Kernel in all locations of the image, would show in feature map whether there are such edges at the various image positions (or how strongly it is measured such an edge to be present).

By doing this one has created even more data, so at a certain moment one wants to reduce the data, by using a so-called pooling layer. E.g. one could determine a single value for a block of 10x10 values in a feature map, thereby reducing the resolution, and obtaining e.g. a 400x200 pixel first pooled map Mp1 as a subsequent layer of the first feature map (layer). Since a convolution Kernel often starts correlating more and more the more it starts overlapping with the localized pattern that is being detected, one can simply take the maximum one of the results in the feature map. This is probably also a well-learned insight of that layer, useful for later, as it is the totality of the NN that learns how to determine correct re-grading functions, but the network works by determining ever more complex and ultimately quite interesting image features (e.g. a square can be seen as a collection of two vertical and two horizontal lines). Indeed typically one will not use a single convolution and pooling layer as schematically illustrated, but several pooling layers for consecutive data reduction, each of which may have one or several convolutional layers before it. So one can look at derivatives (i.e. contrast) not just of a small local region, but regions on coarser scale i.e. further away. E.g. the cave example ImSCN3 of Fig. 1 (and its optimally shaped Para re-grading function, i.e. the values of its three curve shape controlling parameters) can be learned from the derivative of a bright central region versus a very dark surrounding.

Instead of using fixed convolution Kernels like in classical programmed machine vision, the NN will automatically learn the optimal Kernels via the backpropagation in the training phase. I.e. e.g. first internal weight of the first feature Kernel, Win11_f1, will converge to -1 over the successive training iterations.

Finally it is time to reduce to fully connected network layers, because in the end one wants to learn from the totality of the image data, e.g. a specific re-grading being needed by a person being on a 2/3$^{rd}$ location in the image from the left side, whilst there is a lamp illuminating the cave in the upper right corner (e.g. in a 5% by 5% of the image size rectangle). To do this the data of the last of the convolutional layers has to be flattened in a one-dimensional vector of NN cells and their values.

So typically one or more 1D fully connected layers follow, e.g. fully connected layer FC1, and the last fully connected (output) layer FC2 yielding the desired understood data, in this case the e.g. 2x 3 parameters of two flavors of useful re-grading Para for the presented at least one image.

Lastly, typically after the convolutions an activation function is used for conditioning the convolutions, e.g. in the preferred embodiment a rectified linear unit activation function (ReLU), which zeros negative convolution results, if any.

An exemplary embodiment code for the first NN written in Pytorch is the following (model training):

```
import torch
from torch.utils.data import Dataset, DataLoader
import torch.nn as nn
import torch.nn.functional as F
import torch.optim as optim
import torchvision
from torch.utils.data import Subset
from sklearn.model_selection import train_test_split
from torchvision import datasets, transforms
import pandas as pd
# pandas is a software library written for the Python programming
language for data manipulation and analysis.
import cv2
import numpy as np
# NumPy is a library for the Python programming language, adding
support for large, multi-dimensional arrays and matrices


class hdrDataset(Dataset):
    def __init__(self, dataPath, imageWidth, imageHeight, outputSize):
        self.dataPath = dataPath
```

```
        self.imageWidth = imageWidth
        self.imageHeight = imageHeight
        self.outputSize = outputSize
        self.data = pd.read_csv('C:/Data/hdr/y.csv') # mapping curve
parameters (y)
        self.numberOfSamples = len(self.data.index)
    def __len__(self):
        return self.numberOfSamples
def __getitem__(self,idx):
        if torch.is_tensor(idx):
           idx = idx.tolist()
        imageFile = 'C:/Data/hdr/x_'+str(idx+1)+'.png'
# HDR input image sample (x)
        image =
cv2.imread(imageFile,cv2.IMREAD_UNCHANGED).astype('float32')/65535.0
        x = torchvision.transforms.ToTensor()(image)
        parameters = self.data.iloc[idx].to_numpy().astype('float32')
        y = parameters[2:5]
# Predict 3 parameters (y)
        sample = {'x': x, 'y': y}
# A sample is the pair (x,y)
        return sample


# here the neural network topology (layers, e.g. convolution layer) is
defined, and thereafter (yielding successive values of the new x) the
processing of the layers
class hdrNet(nn.Module):
    def __init__(self,outputSize):
        super(hdrNet, self).__init__()                     # Network functions
        self.conv1 = nn.Conv2d(3, 8, 3)
# the three parameters in the call meaning in succession: 3 to 8
channels (i.e. 3 input channels for the input images, and 8 feature
maps therefrom), using a 3x3 filter in the convolution
        self.conv2 = nn.Conv2d(8, 32, 3)
# 8 to 32 channels (i.e. from 8 feature maps in the first hidden
layer, we multiply to 32 more knowledgeable secondary feature maps),
3x3 filter
```

```
        self.conv3 = nn.Conv2d(32, 64, 3)        # 32 to 64 channels, 3x3
filter
        self.fc1 = nn.Linear(64 * 14 * 27, 64)
# Image has size h x w = 14 x 27; here after the subsampling/pooling,
we have fully connected (i.e. each neuron of a layer connects with
each neuron of a successive layer) linear layer, but since the images
have been downsampled to 14x27 it is a smaller network; the 64 comes
from coagulating together the 64 feature maps we had in the last
convolutional layer; the number of output nodes in this first fully
connected layer is 64
        self.fc2 = nn.Linear(64, 128)   #fully connected linear layer
mapping 64 inputs to 128 output nodes
        self.fc3 = nn.Linear(128, outputSize)   # outputSize is e.g. 2
times 3 parameters, in case the network is to train for two typical
flavors of re-grading function of the exemplified type Para


    def forward(self,x):                     # How the functions connect
        x = F.relu(self.conv1(x))
# Filter 3 channel image with a 3x3 convolution Kernel (learned by the
NN during training)
        x = F.max_pool2d(x, (8, 8))
# 8x8 downscale of 8 channels (the amount of feature maps obtained
from the first convolution later as defined in self.conv1 =
nn.Conv2d(3, 8, 3)
        x = F.relu(self.conv2(x))
# Filter 8 channel low res. Image with conv2 (the relu is an
activation function which zeroes negative numbers, and keeps positive
numbers as is)
        x = F.max_pool2d(x, (8, 8))        # 64x64 downscale of 32 channels
        x = F.relu(self.conv3(x))    # Filter 32 channel lower res. image
        x = x.view(-1, self.num_flat_features(x))
# Convert from X,Y,Chan to 1D tensor (view is a dimension selection
operation)
        x = F.relu(self.fc1(x))            # Multi-Layer Perceptron (MLP)
        x = F.relu(self.fc2(x))
        x = F.relu(self.fc3(x))
        return x
```

```
# Output mapping parameters of mapping (x being the e.g. 2x3
parameters defining two flavors of Para)

    def num_flat_features(self, x):
        size = x.size()[1:]   # contains all dimensions except the batch
dimension
        num_features = 1
        for s in size:
          num_features *= s
        return num_features
```

# this defines the training phase, iterating a number of times over the training data till the weights of the NN are sufficiently reliable (the amount of iterations controlled by the epochs variable, and batchsize defining how much training data is taken (depending typically on available training resources, if there is less one must train longer with smaller batches))

```
def train(epochs, batchsize):
    # estimation 3 parameters
    outputSize = 3
# create dataset
    dataset = hdrDataset('dataPath',1920,1080,outputSize)
    device = torch.device("cuda:0" if torch.cuda.is_available() else
"cpu")
    print(device)
# create object that automatically loads data during training
    dataloader = DataLoader(dataset, batchsize, shuffle=True,
num_workers=0)
# define the model based on the network architecture
    model = hdrNet(outputSize)
    # print the model architecture
    print(model)
    # Transfer model to GPU
    model.to(device)
# Use means squared error between predicted and ground-truth
parameters (i.e. the selected error criterion for learning to match to
the data of the training set is MSE)
    criterion = torch.nn.MSELoss()
```

```
    # Set parameters related to the error minimization search (lr is the
    learning rate)
    optimizer = torch.optim.Adam(model.parameters(), lr=0.001,
    betas=(0.9,0.99))
    # Run multiple times (e.g. epochs 50) over entire dataset
    for epoch in range(epochs):
        # Load a subset of all data (e.g. 10%)
        for batch, sample in enumerate(dataloader):
    # x = HDR input image, y = ground-truth mapping curve parameters
            x = sample['x'].to(device)
            y = sample['y'].to(device)
            # zero the parameter gradients
            optimizer.zero_grad()
            # Fitting
            ypred = model(x)           # Predict parameters from HDR image
            loss = criterion(ypred,y)   # Calculate error
            loss.backward()
    # Back-propagation (i.e. back-propagation is used to train the model
    to get the correct weights)
            optimizer.step()           # Optimizer ready for the next
    iteration
            # Print for current epoch and batch the error
            print("epoch = ",epoch," batch = ",batch," loss = ",
    loss.item())
        # Save the model weights
        torch.save(model.state_dict(),'C:/Data/hdr/state_dict_model.pt')


def evaluate():
    # estimation 6 parameters
    outputSize = 6
    # get model architecture
    model = hdrNet(outputSize)
    # load the model parameters
    model.load_state_dict(torch.load('C:/Data/hdr/state_dict_model.pt'))
    # load the a dataset for evaluation
    dataset = hdrDataset('dataPath',1920,1080,outputSize)
    # create a data loader
```

```
dataloader = DataLoader(dataset)
# loop over dataset one sample at the time
for batch, sample in enumerate(dataloader):
    # predict mapping curve parameters from input HDR image
    y = model(sample['x'])
    # print predicted parameters
    print("predicted = ", y)
    # print ground-truth parameters
    print("true = ", sample['y'])
# done
return 0
```

Another embodiment uses the above system to create 1 set of Para parameters in the third fully connected layer (i.e. outputsize = 3), but then adds a fourth fully connected layer to derive various flavors of the "average" Para of the third layer, with corresponding modified code parts: class hdrNet(nn.Module):

```
def_init_(self,outputSize):
    super(hdrNet, self)._init_()
    self.conv1 = nn.Conv2d(3, 8, 3)
    self.conv2 = nn.Conv2d(8, 32, 3)
    self.conv3 = nn.Conv2d(32, 64, 3)
    self.fc1 = nn.Linear(64 * 14 * 27, 64)
    self.fc2 = nn.Linear(64, 128)
    self.fc3 = nn.Linear(128, 128) # we include an extra
    layer
    self.fc4 = nn.Linear(128, outputSize)
    # outputSize is 4✕3=12 parameters, for the example of 4 flavors of
    Para
    and
    def forward(self,x):
    x = F.relu(self.conv1(x))
    x = F.max_pool2d(x, (8, 8))
    x = F.relu(self.conv2(x))
    x = F.max_pool2d(x, (8, 8))
    x = F.relu(self.conv3(x))
    x = x.view(-1, self.num_flat_features(x))
    x = F.relu(self.fc1(x))
    x = F.relu(self.fc2(x))
    x = F.relu(self.fc3(x))
    x = F.relu(self.fc4(x))
    return x
```

The second NN will typically not be a CNN, since no such spatial preprocessing is necessary, and it may be a fully connected network like a multilayer perceptron, or a deep belief network, etc.

An example, 4-element, sensor vector (of size **Nsensor)** may consist of:

- Device direction angle relative to North (compass sensor in smartphone) unit degrees
- Device azimuth angle unit degrees
- Local time as measured in hour of the day with values 0 to 23.
- Weather code [0 = sunny, 1 = partially sunny, 2 = cloudy, 3 = rain] (e.g. obt
- Device ambient light sensor reading, encoded in 100 levels.

These five variables are one manner to provide information to the model of the second NN for it to learn to predict whether the smartphone screen is being illuminated by bright light or viewed in the shade.

A possible code for the second neural network is e.g.:

```
class hdrNet(nn.Module):
 def_init_(self, Nsensor, Nweights):
    super(hdrNet, self)._init_()
    self.fc1 = nn.Linear(Nsensor, 64)
    self.fc2 = nn.Linear(64, 128)
    self.fc3 = nn.Linear(128, Nweights)
    def forward(self, x2):
    # x2 = sensor data vector (other embodiments can also get various x12
    inputs regarding the HDR input image IM_HDR)
    x = F.relu(self.fc1(x2))
    x = F.relu(self.fc2(x))
    x = F.relu(self.fc3(x))
    return x
```

**Fig. 5** shows an example of how one can calculate a simple contrast severeness measure, which can be a good image-summarizing input for a second NN to determine which would be a good weighting. It determines in the luma histogram N(Y) of the input image IM_HDR how far from a darker lobe of lumas the bright objects (in general, i.e. wherever positioned; which can be improved by doing various measures for different locations) lie, weighed also by how many bright pixels there are. So the measure could be e.g. a*DB*F(NB), wherein F(NB) is a function which saturates its height increase for really large amounts of bright pixels. Any such useful measures being input can help the second NN to come to even better weight outputs.

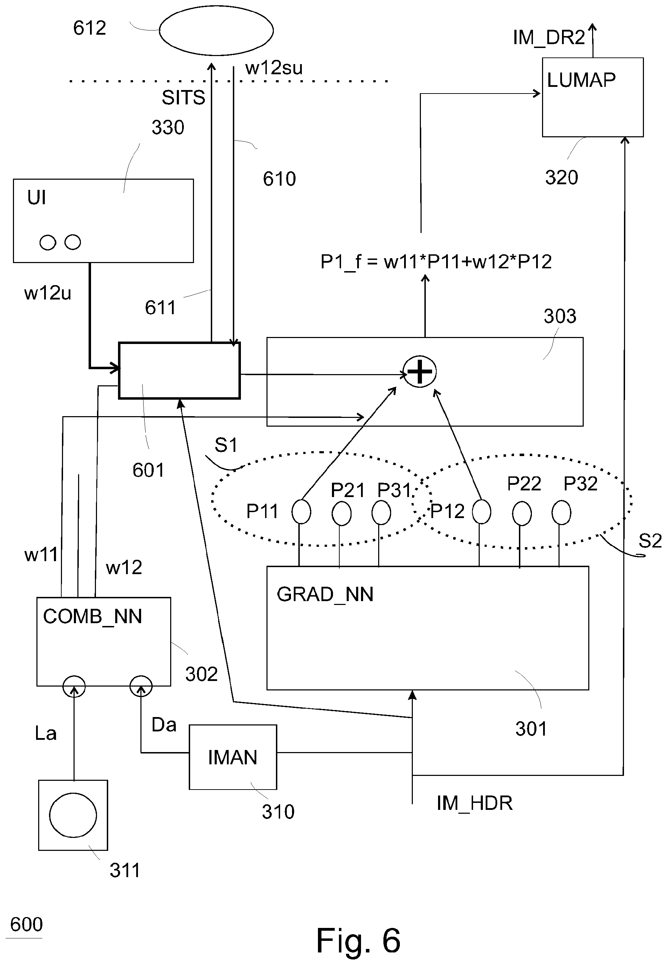

**Fig. 6** shows a more advanced version (600) of the apparatus for luminance re-grading. It is particularly useful in an application (i.e. e.g. in a consumer apparatus, like a video capturing mobile phone) wherein the user is to have control over the grading of his self-captured video. The difference with Fig. 3 is the HDR image grading situation analysis unit 601. This unit will analyze what the situation of user selected weights (w12u) is, and judge whether different weights may be in order. In its most basic form it will work based on the user weights and the weights of the second NN, and more advanced embodiments may also check characteristics of the input image (instead of doing this by itself, it may retrieve input from what one or two of the two neural networks have on their output, if they also produce some characteristics of the image).

The HDR image grading situation analysis unit 601 is arranged to look at the values of at least one of the weights of at least one of the user weights and second NN weights (when checking both, it may look at the difference of those corresponding weights). It may derive a situation summarization signal (SITS), which may e.g. consist of an identification of a needed weight for a type of re-grading curve (e.g. weight for the linear segment for the darkest lumas of a Para). This signal requests a corresponding suggested weight w12su from an external database 612, e.g. typically connected via the internet. In this database their may be summarized weights which are good for particular re-grading situations, e.g. typically collected from many re-grading operations (e.g. via similar apparatuses 600). Preferably some type of HDR image situation is also communicated in the situation summarization signal SITS, so that specific suggested weights for the currently viewed video scene can be retrieved. This may be as simple as e.g. a percentage of pixels below a first luma threshold (typically dark pixels, e.g. the threshold being below 30% or 25% on PQ scale) and/or a percentage of pixels above a second luma threshold (being e.g. 75% or higher), but can also contain a vector of other image describing values. The managing circuit of the database 612 can then deliver a suggested weight w12su provided it corresponds to an image that is close to the communicated image statistics or in general properties as communicated in SITS. The image grading situation analysis unit 601 can then communicate this suggested weight w12su to the combiner 303 instead of the user selected weight, or a result of an equation balancing those two, e.g. an average weight.

**Claims**

1. An apparatus for luminance re-grading (300) of an input high dynamic range image (IM_HDR) of first luminance dynamic range into a second image (IM_DR2) of second luminance dynamic range, the apparatus comprising:

   - a first neural network processing circuit (301), having as input a set of pixel luminances of the input high dynamic range image (IM HDR), **characterized in that** the first neural network processing circuit has at least two sets of outputs, a first output set (S1) comprising at least one parameter (P11) which determines a re-grading function, and a second output set (S2) comprising at least one corresponding parameter (P12) which determines a re-grading function which is determined by the same parametric definition but a different parameter value;

- a second neural network processing circuit (302), which has as input at least one measurement value (La) from at least one sensor (311), and as output a set of weights corresponding in amount to at least the number of sets of the first neural network processing circuit;

- a combiner (303), arranged to add a first parameter (P11) of the first output set of the first neural network processing circuit multiplied by a corresponding first weight (w11) from the second neural network processing circuit to a corresponding output (P12) for the same re-grading function defining parameter of the second output set of the first neural network processing circuit multiplied by a corresponding second weight (w12) from the second neural network processing circuit, yielding a final parameter (P1_f); and

- a luma mapping circuit (320) arranged to map input lumas of the input high dynamic range image (IM_HDR) with a luma mapping function (F_L) which is defined by the final parameter (P1_f) to obtain output lumas of the second image (IM_DR2).

2. The apparatus for luminance re-grading as claimed in claim 1, which is coupled to a sensor which is coupled to a display.

3. The apparatus for luminance re-grading as claimed in one of the above claims, which is coupled to a light meter (311) arranged to provide a measure of an amount of light in an environment.

4. The apparatus for luminance re-grading as claimed in one of the above claims, which is coupled to an image summarization unit (310), which is arranged to measure luminance aspects of the input high dynamic range image (IM_HDR).

5. The apparatus for luminance re-grading as claimed in one of the above claims, comprising a user interface unit (330) arranged to determine a set of user-specified weights, and a selector (331) to select at least one user-specified weight in place of a corresponding weight from the second neural network processing circuit (302) to enter the combiner (303).

6. The apparatus for luminance re-grading as claimed in one of the above claims, **characterized in that** it is comprised in an apparatus which contains a display panel.

7. The apparatus for luminance re-grading as claimed in one of the above claims, **characterized in that** it is comprised in a video coding and communication apparatus for communicating video to one or more receivers.

8. A method of for luminance re-grading (300) of an input high dynamic range image (IM_HDR) of first luminance dynamic range into a second image (IM_DR2) of second luminance dynamic range:

- using a pre-trained first neural network processing circuit (301), having as input a set of pixel luminances of the input high dynamic range image (IM HDR), **characterized in that** the first neural network processing circuit has at least two sets of outputs, a first output set (S1) comprising at least one parameter (P11) which determines a re-grading function, and a second output set (S2) comprising at least one corresponding parameter (P12) which determines a re-grading function which is determined by the same parametric definition but a different parameter value, to output the at least two parameters (P11, P12) for the input high dynamic range image (IM_HDR);

- using a second neural network processing circuit (302), which has as input at least one measurement value (La) from at least one sensor (311), and as output a set of weights corresponding in amount to the total of the amount of outputs of the sets of the first neural network processing circuit, to output the set of weights;

- adding a first one of the at least two parameters (P11) of the first output set of the first neural network processing circuit after multiplication by a corresponding first weight (w11) from the second neural network processing circuit, to a corresponding second one of the at least two parameters (P12) which is a corresponding parameter of the same re-grading function from the second output set of the first neural network processing circuit and is prior to the addition multiplied by a corresponding second weight (w12) from the second neural network processing circuit, yielding a final parameter (P1_f); and

- applying a luma mapping function which has a curve shape defined by the final parameter (P1_f) to map input lumas of the input high dynamic range image (IM HDR) to obtain output lumas of the second image (IM_DR2).

9. A computer program product comprising code which when run implements the method of claim 8.

Fig. 1

Fig. 2

Fig. 3

300

Win11_f1 ‑1 1
Win21_f1 ‑1 1
‑1 1
‑1 1

401

Fim = f1

Mp1

Wim

Him

Nim

IM_HDR

f2

Mp2

f3

Mp3

P11 P21
P31
P12 P22
P32

Fc1

Fc2

Fig. 4

Fig. 5

Fig. 6

Europäisches
Patentamt

European
Patent Office

Office européen
des brevets

# EUROPEAN SEARCH REPORT

Application Number

EP 22 15 3613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/211503 A1 (LEE JONGHYUNG [KR] ET AL) 2 July 2020 (2020-07-02)<br>* paragraph [0033] *<br>* paragraph [0274] – paragraph [0333] *<br>* figures 1, 2 and 13C *<br>----- | 1-9 | INV.<br>G06T5/00<br>H04N5/235<br>H04N19/98<br>H04N19/40 |
| Y | JP 2 907057 B2 (NEC CORP) 21 June 1999 (1999-06-21)<br>* paragraph [0008] *<br>----- | 1-9 | |
| X | BASHFORD-ROGERS THOMAS ET AL: "Learning Preferential Perceptual Exposure for HDR Displays", IEEE ACCESS, vol. 7, 3 April 2019 (2019-04-03), pages 36800-36809, XP011720171, DOI: 10.1109/ACCESS.2019.2898910 [retrieved on 2019-04-19]<br>* abstract *<br>* figure 1 and 6 *<br>----- | 1-4,6-9 | |
| A | US 2016/100183 A1 (YAMAMOTO KAZUO [JP] ET AL) 7 April 2016 (2016-04-07)<br>* figure 2 and 23 *<br>----- | 1-9 | **TECHNICAL FIELDS SEARCHED (IPC)**<br>G06T<br>H04N |

The present search report has been drawn up for all claims

| Place of search | Date of completion of the search | Examiner |
|---|---|---|
| Munich | 7 July 2022 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 3613

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2022

| Patent document cited in search report | | Publication date | Patent family member(s) | | Publication date |
|---|---|---|---|---|---|
| US 2020211503 | A1 | 02-07-2020 | EP | 3903304 A1 | 03-11-2021 |
| | | | KR | 20200080542 A | 07-07-2020 |
| | | | US | 2020211503 A1 | 02-07-2020 |
| | | | WO | 2020139017 A1 | 02-07-2020 |
| JP 2907057 | B2 | 21-06-1999 | JP | 2907057 B2 | 21-06-1999 |
| | | | JP | H08292752 A | 05-11-1996 |
| US 2016100183 | A1 | 07-04-2016 | CN | 105284105 A | 27-01-2016 |
| | | | CN | 110033795 A | 19-07-2019 |
| | | | EP | 3013041 A1 | 27-04-2016 |
| | | | EP | 4037309 A1 | 03-08-2022 |
| | | | JP | 2015005878 A | 08-01-2015 |
| | | | KR | 20160022304 A | 29-02-2016 |
| | | | TW | 201519225 A | 16-05-2015 |
| | | | TW | 201812746 A | 01-04-2018 |
| | | | US | 2016100183 A1 | 07-04-2016 |
| | | | US | 2018199050 A1 | 12-07-2018 |
| | | | US | 2019364293 A1 | 28-11-2019 |
| | | | US | 2021168393 A1 | 03-06-2021 |
| | | | WO | 2014203747 A1 | 24-12-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9077994 B
- WO 2017108906 A
- WO 2016119979 A